# EUROPEAN PATENT SPECIFICATION

(11) **EP 1 916 514 B1**
(45) Date of publication and mention of the grant of the patent: **11.03.2015**
(21) Application number: 07118628.2
(22) Date of filing: 16.10.2007
(51) Int. Cl.: G01N 21/90, B07C 5/34

(54) **Machine for inspecting glass containers**
Maschine zur Überprüfung von Glasbehältern
Machine pour inspecter des conteneurs de verre

(30) Priority: 23.10.2006 US 585397; 23.10.2006 US 585381
(43) Date of publication of application: 30.04.2008
(73) Proprietor: Emhart Glass S.A., 6330 Cham (CH); Applied Vision Corporation, Akron, OH 44223 (US)
(72) Inventor: Sones, Richard A., Cleveland Heights, OH 44118 (US); Diehr, Richard D., Horseheads, NY 14845 (US); Novini, Amir R., Akron, OH 44333 (US)
(74) Representative: Warren, Anthony Robert

(56) References cited:
- EP-A- 0 497 477
- WO-A2-2006/011803
- GB-A- 2 350 423
- JP-A- 2 257 044
- US-A- 4 865 447
- US-A- 4 945 228
- US-A- 5 486 692
- US-A- 6 031 221
- US-A1- 2005 248 766

## Description

The present invention relates to machines, which inspect glass containers for defects, and more particularly, to a system which inspects for cracks in translucent glass containers.

In the glass container industry, small cracks or fractures in the glass are referred to as "check defects" or "checks". Checks can range from sub millimeters to several hundred millimeters and can be oriented at any direction from vertical to horizontal. Glass is not a crystalline structure by nature, but most cracks propagate roughly along a plane of some orientation in space mostly determined by the shape of the glass at that location. For example, a crack that began as a vertical crack at the upper surface of the mouth primarily propagates in a vertical plane. Checks can appear in any orientation and on any portion of a container and can exist wholly within the glass or may penetrate to one or both surfaces. Checks are considered phase objects and do not absorb light like a solid object does. Checks are primarily reflective in nature if their opposed surface separation is at least half a wavelength of light. However, very few checks with a smaller separation will reflect light and accordingly they will not likely be detectable by direct reflection methods, but they might have scattering points when they penetrate to the one or both surfaces of the container and will scatter light back to the sensors.

Most of these crack defects will drastically weaken the bottle, often causing it to rupture or to leak. Therefore, bottle manufactures like to remove these containers before they reach filing plants. Checks appearing near the mouth of the containers are called finish checks. In the glass bottle industry, the term "container finish" refers to the portion of the bottle that defines the mouth, threads or beads, and the ring. The upper surface of the mouth is referred as the sealing surface.

Almost all commercially available check detectors work on the principle of reflected light. A conventional check detector consists of a series of continuously operating light spot light sources and associated photodetectors that are positioned so that known checks on a bottle rotating at an inspection station will reflect light from one of the sources to one of the photo-detectors. Signal processing of the photodetector outputs recovers the sharp peaks while rejecting lower frequency signal variations caused by ambient light, reflection from the bottle sidewall, etc.

While commercially available check detectors are successfully deployed on most glass bottle production lines, there are several drawbacks to the approach. A few of those are: many point sensors are required for many possible reflection angles; some sensor angles are difficult to position; additional sensors and lights need to be added as more production defects appear; time consuming setup is required for each type of container; and the difficulty of reproducing the same setup from one inspection line to another.

The following U.S. Patents Numbers 4,701,612, 4,945,228, 4,958,223, 5,020,908, 5,200,801, 5,895,911, 6,104,482, 6,211,952, and 6,275,287 and JP-A-2,257,044 all relate to devices that detect defects in the finish of a container.

The present invention is directed to a machine for inspecting a selected area of a vertical glass container at an inspection station, generally of the type disclosed in the aforesaid JP-A-2, 257, 044 comprising means for rotating a glass container about a vertical axis at the inspection station, first and second light sources for illuminating the selected area of a container when the container is at the inspection station, the light axes of the first and second light sources defining together an angle at the axis of the container at the selected area when the container is at the inspection station, and a camera having a detector axis intersecting the container axis at its intersection with the light axes and defining an angle of approximately 45 degrees above the horizontal, and including a triggerable imaging portion for imaging the selected illuminated area of the container.

In this JP-A, the light sources and camera are located above the mouth of a bottle and the optical axis of the camera, and a light ray from each light source, are inclined downwardly onto the sealing surface around the bottle mouth, so that the camera will receive light from the rays reflected by the sealing surface, via a rotary mirror. The mirror is rotated to follow the movement of the bottle as it is transported through the inspection station, and is provided with a shielding plate to remove scattered light from the bottle mouth.

US 4, 945, 228 A is directed to the inspection of a container finish in which a first and a second light source are provided for illuminating a selected area of a container and a camera receives the light reflected by the sealing surface according to the preamble of claim 1.

It is an object of the present invention to provide an apparatus for inspecting glass containers, which can detect vertical, horizontal, and any other angle cracks on a bottle, which is user friendly and easily adjusted. Another object of this invention is to provide a detector that can detect known types of checks and also any new checks without specific setup requirements.

According to the present invention, there is provided a machine for inspecting a glass container as defined in claim 1.

The present invention will now be described with reference to the accompanying drawings which illustrate a presently preferred embodiment incorporating the principles of the invention, and in which:-
Figure 1 is an oblique elevational schematic view of an inspection station of a machine for inspecting glass containers for checks and other defects, made in accordance with the teachings of the present invention.
Figure 2 is a block diagram showing the operation of the pair of light sources and camera shown in Figure 1;
Figure 3 is a schematic top view of the container at the inspection station showing the light axes of a pair of light sources and the camera;
Figure 4 is a schematic elevational view showing the light axes of the light sources and camera shown in Figure 3;
Figure 5 is a logic diagram illustrating the operation of the camera system of the inspection machine;
Figure 6 is a logic diagram illustrating the operation of the lighting system of the inspection machine;
Figure 7 is a timing diagram illustrating the operation of the light sources;
Figure 8 is a side elevational view of one of the light sources; and
Figure 9 is an elevational view showing how the LED's of one of the light sources are aimed toward the finish.

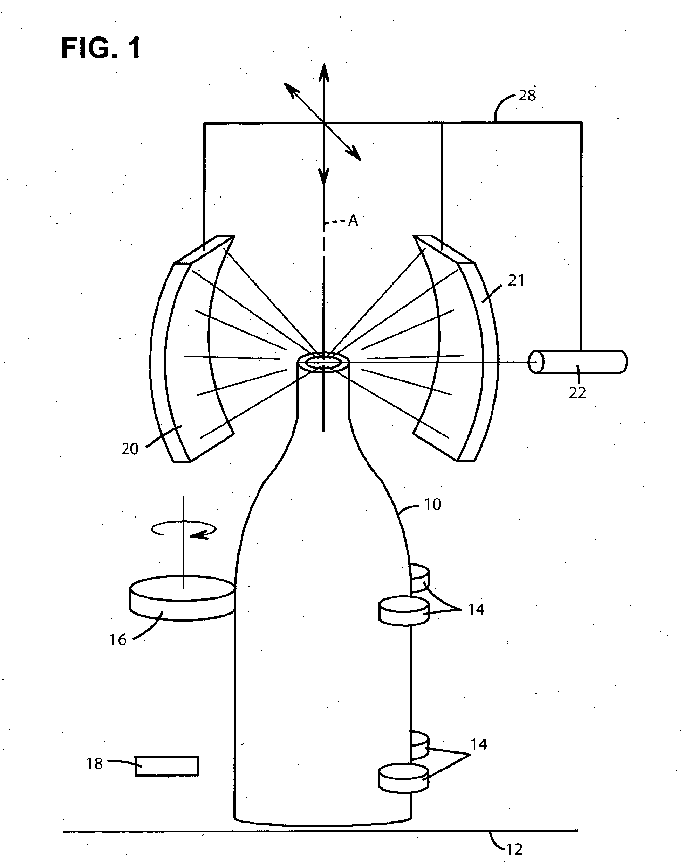

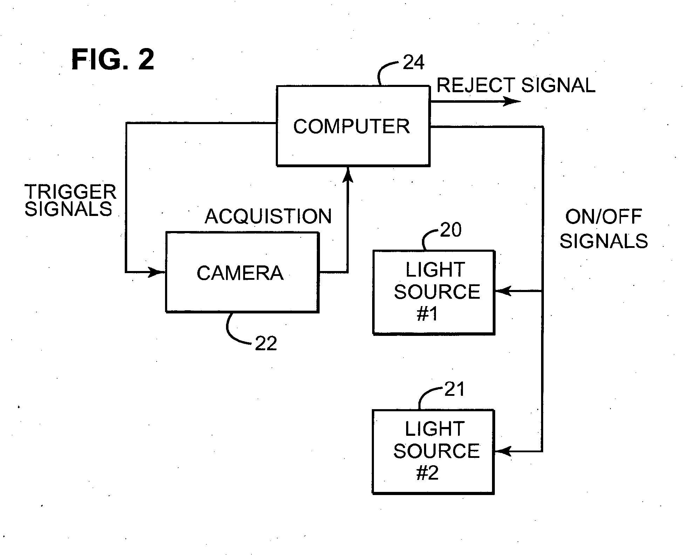

In a machine for inspecting glass containers (bottles), the containers 10 are transported along a conveyor 12 to an inspection station illustrated in Figure 1. The conveyor may be a linear belt or a turret type feed system. A container 10 is engaged by upper and lower rear pairs of idler rollers 14 and a front drive wheel 16 so that rotation of the drive wheel in the clockwise direction will rotate the container in the counterclockwise direction. There is conveyor dwell of sufficient duration at the inspection machine so that the container can be rotated more than 360 degrees while the inspection takes place. A container present sensor 18 will sense the presence of a container at the inspection station (the sensor can be upstream and the actual presence of the container at the inspection station could be defined by an encoder count following the sensing of the container by the upstream part present sensor). Light sources (Light Source #1/20 (see Figures 1 and 2) and Light Source #2/21) illuminate the finish portion of the container and a Camera/22 images the finish portion.

Figure 2 illustrates the operation of the Camera and Light Sources. A Computer 24 delivers On/Off signals to Light Source #1/20 and Light Source #2/21 and delivers Camera Trigger signals to the Camera/22. The Camera has a matrix array of elements (pixels) to receive an image of the finish portion of the container during the Camera's exposure period. The Camera could be a CCD, MOS or like camera which will store an image until the next Trigger Signal. When a Trigger Signal is received, the existing image will be captured and transferred, as an "Acquisition", to the Computer so that it can be recorded and processed by the Computer. The Computer will issue a Reject Signal if a defect is identified.

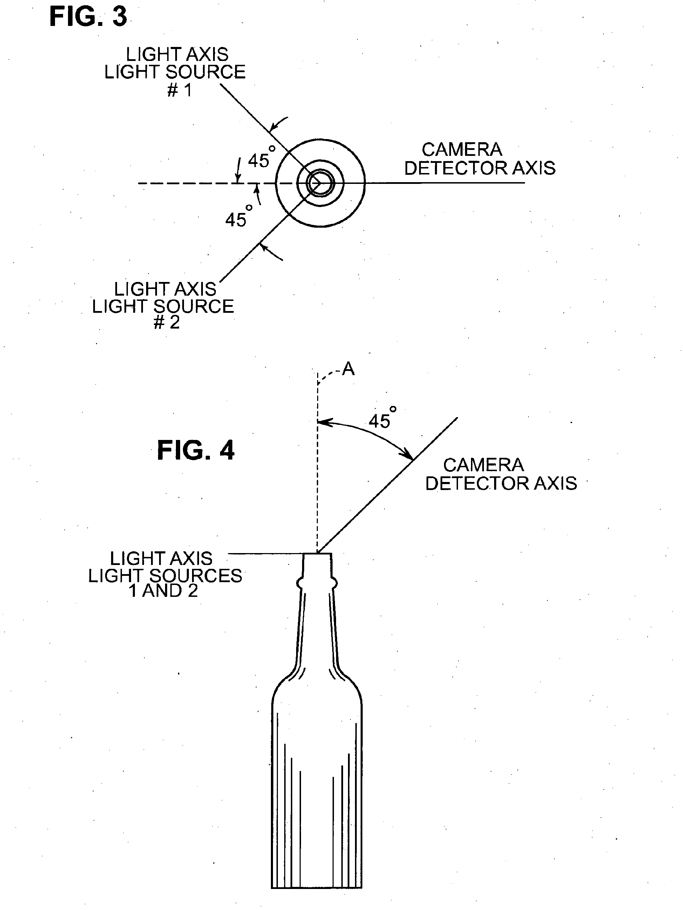

As can be seen from Figures 3 and 4, the Light Axis for each light source is horizontal and intersects the axis "A" of the container. Each Light Axis also lies in a vertical or "Z" plane (not shown) which intersects the axis "A" of the container, and is a positive plane in that it is in front of the container. The two light axes are orthogonal to each other and 45° to a vertical or "Z" plane including the Camera Detector Axis. The Detector Axis for the Camera/22, which is located in a negative "Z" plane in that it is behind the container, is approximately 45° from horizontal. With this relationship, the camera is looking at a dark field and seeing only light coming from the checks. The light sources and camera are supported by structure 28 that can be vertically displaced and horizontally displaced to reposition the system for different height/diameter containers.

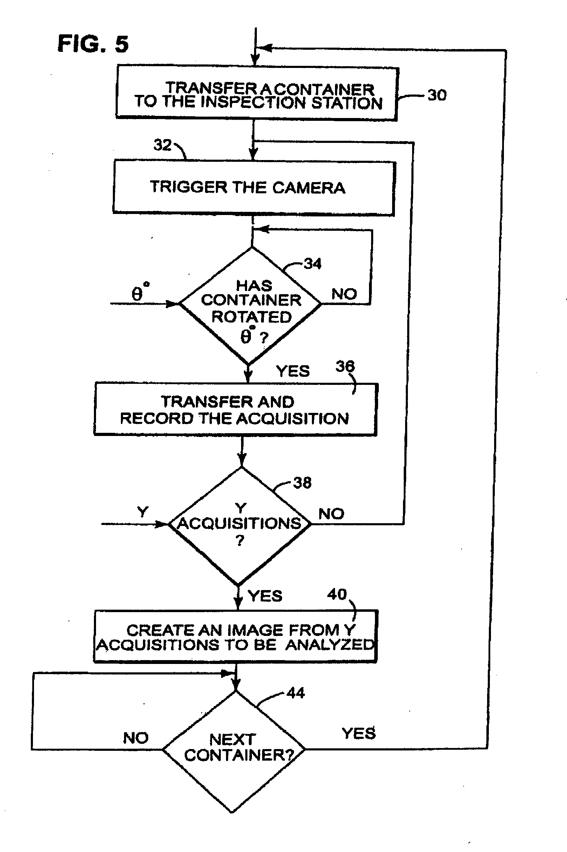

With reference to Figure 5, to start an inspection of a container, for example a bottle, the machine will Transfer A container To The Inspection Station/30. Following a time sufficient for the rotation of the container, by the drive wheel, to become stable, the Computer will Trigger The Camera/32. This starts the acquisition of the image. The following explanation is provided in terms of angles for purposes of clarity, but it should be understood that, in a digitally controlled camera, instructions may be time based rather than defining actual angles so that when something is to occur in an approximate θ° (60° is the defined angle of rotation in the preferred embodiment), an approximate time (number of pulses) may be selected which approximately corresponds to that angle, and where events are desired approximately every 7.5°, for example, the pulses could be divided by 8. When the query "Has Container Rotated θ°?" /34 (θ° or a selected number of pulses corresponding approximately to that angle of rotation can be set) is answered in the affirmative, the Computer will Transfer And Record The Acquisition/36. Once the Camera is triggered, the Camera will capture data until the Camera is again triggered (following the rotation through θ°). When the Computer answers the query "Y Acquisitions?" in the negative, the Computer will again Trigger The Camera/32. When the computer answers the query "Y Acquisitions?" /38 in the affirmative ("Y' may be set and is six in the preferred embodiment), the Computer will Create An Image From Y Acquisitions To be Analyzed/40. The image created (a Critical Addition), where as in the preferred embodiment "Y" is six, will represent the entire (approximately) 360° surface of the finish and will be the Critical Addition of six acquisitions each imaging eight illuminations.

The critical addition will be made in a manner that will maximize the data that indicates that a defect is present. The Critical Addition can represent for each pixel location, the highest intensity of the corresponding pixel in all six Acquisitions which will make up the Critical Addition. Then, when the Computer answers the inquiry Next Container ?/44 in the affirmative, the next container can be processed.

An image processing technique may be used to enhance the signal created by checks from signals created by mold features of the container. First, a reference or "mask image", can be created using a set of sample containers without defects running through the inspection setup (containers without defects are referred as "good ware" and containers with defects that need to be removed during the inspection as "bad ware"). To incorporate all the signals created by good ware from different molds that may contain slightly different structural variations, and small variations of signals due to vibrations and rotation, a large number of images can be acquired and processed to create the mask image. These images contain almost all the possible variations of light reflection by mold marks, threads, seams, and curved surface of good ware. Mask image is created by combining all the good ware images. An image of a container under inspection is created and is compared with the reference or mask image created with good ware. The difference between the inspected container image and the mask image shows the signals created by check defects.

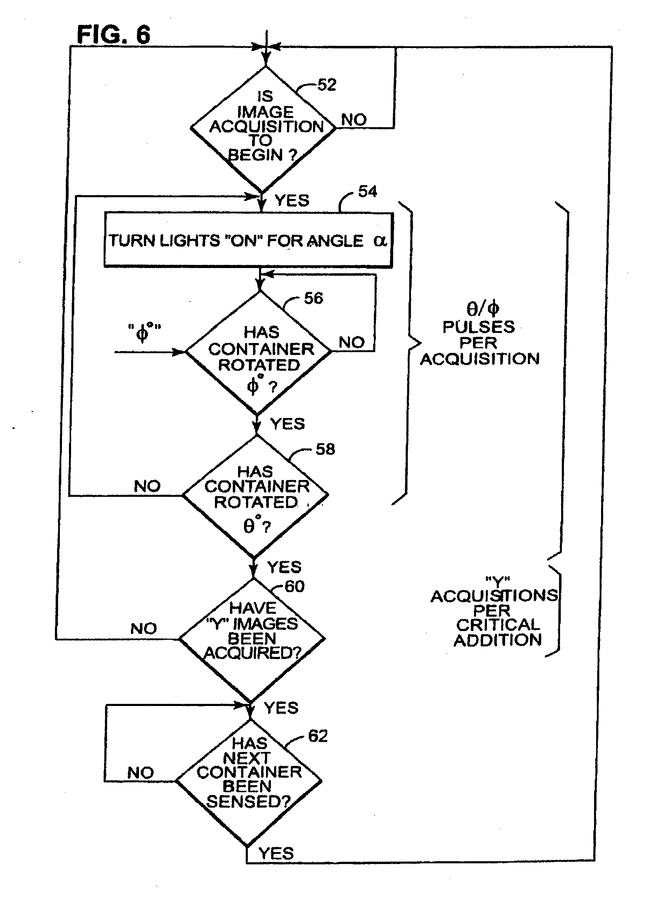

Figure 6 illustrates the operation of the light sources. When the Computer answers the query "Is Image Acquisition To Begin?" /52 in the affirmative, the Computer will "Turn Lights "On" For Angle α"/54 ("α" may be set and could be a defined number of pulses). When the Computer answers the query "Has Container Rotated ϕ °"/56 in the affirmative (ϕ can be set) , and answers the query "Has Container Rotated θ^{o}?" /58 in the negative, the light sources will again be turned "on". When this inquiry is answered in the affirmative (θ/ϕ pulses per acquisition), and the query "Have "Y" Images Been Acquired?"/60, in the negative the entire surface has not been imaged and the entire process can be repeated until "Y" images have been acquired (Y pulses per acquisition). Then, when the computer answers the inquiry "Has Next Container Been Sensed?" /62 in the affirmative, the entire process can be repeated for the next bottle. If the lights are to be on for the entire time that the camera is triggered (α can be set to equal θ°) .

To reduce noise, α is, in the preferred embodiment, defined so that the surface will be illuminated a small portion (25%) of the angle ϕ°, e.g. by strobing the light sources for the entire time the camera is triggered. Checks that will cause a container to be rejected have been found to be imaged when the light sources are "on" only a small fraction of ϕ°. This fraction can be empirically varied to achieve a desired result.

While the imaging process has been disclosed with reference to checks in the finish area of the container, it can be used to inspect other selected areas of containers, for example to identify body or heel checks and other defects.

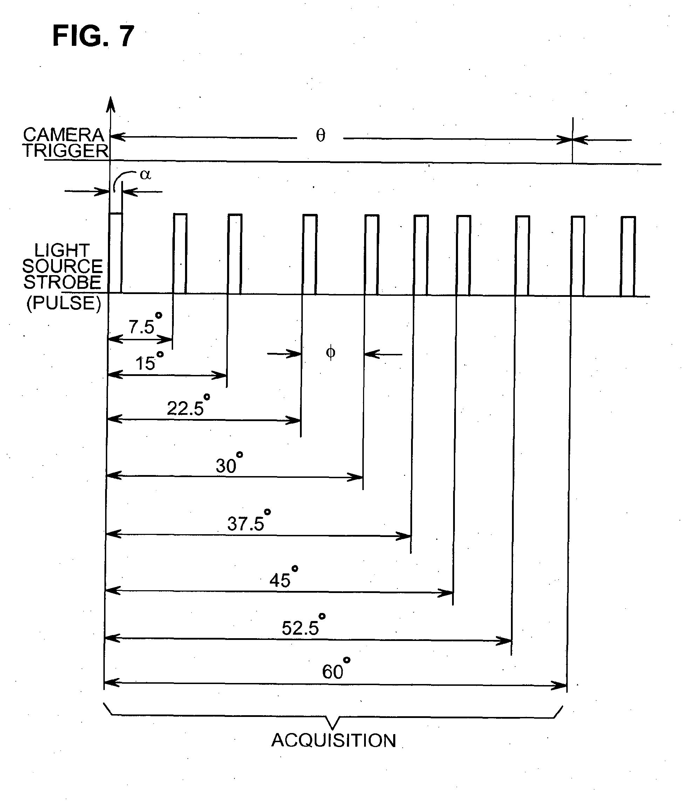

Figure 7 is a timing diagram for an Acquisition comprised of light sources turned on α degrees for every ϕ ° (7.5° in the preferred embodiment) through θ° (60° in the preferred embodiment). The lower the ratio of α /ϕ°, the less noise will be available to interfere with the desired signal.

The light sources 20 and 21 shown schematically in Figure 1, are mirror images and are represented as segments of an arc. These segments may be arcuate in both vertical and horizontal directions relative to the light axes. However, it is not essential for the segments or light sources to be physically arcuate or curved, and other means may be provided to achieve the required direction or pattern of illumination.

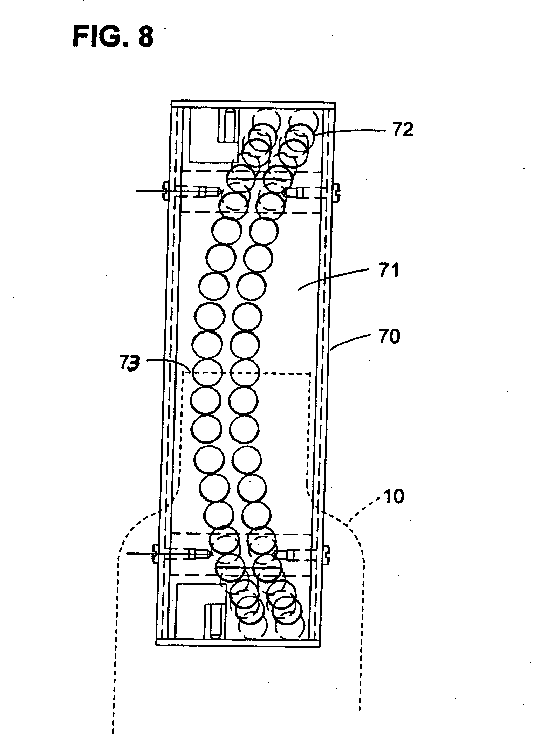

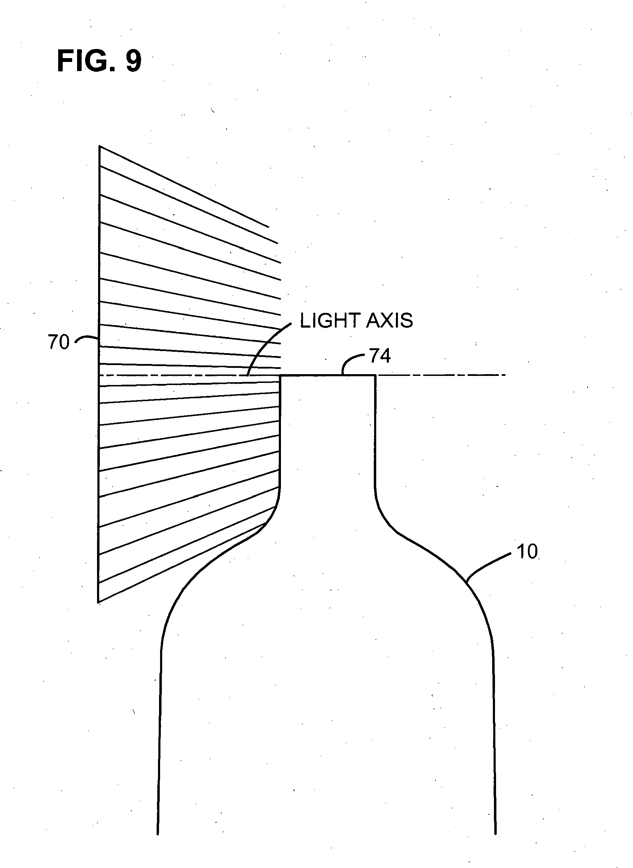

For example, as shown in Figures 8 and 9, in one realization, each light source 70 may be a flat panel or segment having vertical or generally upright columns and horizontal or generally horizontal rows of LEDs (not visible in Figure 9) with the individual LEDs oriented, i.e. inclined, so that their optical axes are directed in the required directions. Therefore, the flat panel is effectively optically equivalent to an arcuate or approximately part-conical segment.

As shown in Figure 8, the light source 70, mounted on a flat panel 71, is perpendicular to the Light Axis and faces the finish of the container 10 which is shown in dotted lines. The segment has inner and outer (or three or four,..) columns of LEDs 72 with the central LEDs 74, which define the Light Axis, standing parallel to the Light Axis and with the remaining LEDs or rows of LEDs being progressively tilted toward the light axis as they proceed away from the Light Axis. The locations of the LEDs in each column may follow an arcuate path on or in the flat panel 71 as shown in Figure 8. The progressive tilting or bending of the individual LEDs is indicated by the darkened semicircles, and, in the upper and lower regions of the panel 71, by the displacement of the front faces of the LEDs (shown as full-line circles) relative to their mountings (shown as broken-line circles). The preferred location of the Light Axis is at the sealing surface 74 but it can be located from the sealing surface to the bottom of the finish. The ideal geometry that the preferred embodiment attempts to approach is that of conical illumination (the cone being horizontal with its apex at the finish), where the top and bottom of the cone are dark so that the camera will not see any direct reflections of light. Viewing the finish as a torus, this conical geometry allows the maximum light to be projected onto the finish with direct reflection. Only an anomaly in the finish (a check) will generate direct reflections to the camera.

This apparatus has following advantages: because the area sensor, i.e. the camera, images an area of the container, it is possible to detect almost all the checks in that region. This makes the inspection independent of the specific orientation and location of the check, and thus enables "new" checks to be detected without changing the setup. The positioning of the area array sensors and light sources will not depend essentially on the geometry of the container. It will be easier to setup for most of the containers with little or no adjustments.

## Claims

1. A machine for inspecting a selected area (74) of a glass container (10) having a vertical axis (A) at an inspection station comprising:
means for rotating the glass container about its vertical axis (A) at the inspection station,
first and second light sources (20, 21) for illuminating said selected area of a container when the container is at the inspection station,
the light axes of each of said first and second light sources (20, 21 intersecting the vertical axis (A) of the container at said selected area when the container is at the inspection station,
wherein
the first and second light sources (20, 21) extend generally vertically, and each light source (20, 21) is a generally vertical array of LEDs including at least one LED defining the light axis for that light source, a first plurality of LEDs extending upwardly above the LED defining the light axis for that light source and a second plurality of LEDs extending downwardly below the LED defining the light axis for that light source,
a camera (22) having a detector axis intersecting said vertical axis of the container at its intersection with said light axes,
the detector axis defining an angle of approximately 45 degrees with the container axis above a horizontal plane perpendicular to the vertical axis of the container,
the camera including a triggerable imaging portion for imaging the illuminated selected area of the container, and
a computer (24) for capturing, transferring and recording the acquired data **characterized in that**
the light axes of the first and second light sources are in the horizontal plane perpendicular to the vertical axis of the container and define with respect to each other a orthogonal angle at the vertical axis of a container at the selected area of the container,
each of said first plurality of LEDs is progressively tilted downwardly toward its associated light axis as a function of the distance from that light axis and each of said second plurality of LEDs is progressively tilted upwardly toward its associated light axis as a function of the distance from that light axis,
the projection of the detector axis of the camera (22) on the horizontal plane defines an angle of 135 degrees with each light axis,
the camera (22) has a continuous exposure period at least equal to the time required for the container to rotate through a defined angle of rotation (Θ), and
the computer (24) is configured
to trigger the imaging portion of said camera (22) when the container is at the beginning of each of a succession of said defined angles, and to trigger the imaging portion of said camera again when the container is at the end of each of said succession of said defined angles, so that the camera will continuously acquire data of said selected area (74) of the container whilst said container rotates through each of said defined angles of rotation,
to acquire the data at the end of each of said succession of the defined angles Θ,
and
to perform an addition of a plurality (Y) of the recorded acquisitions for inspection for defects.

2. A machine according to claim 1, wherein the generally vertical array of LEDs includes horizontally adjacent pairs of LEDs.

3. A machine according to claim 1 or 2, wherein said generally vertical arrays of LEDs form mirrored arcs.

4. A machine according to any preceding claim, wherein
said light sources (20, 21) have a selected "on" time followed by a selected "off" time,
the computer (24) is configured to turn said light sources "on" and "off" a plurality of consecutive times,
said glass container is rotatable through the defined angle of rotation θ while said light sources are consecutively turned "on" and "off" said plurality of times.

5. A machine according to claim 4, wherein the imaging portion of said camera (22) is a matrix array of sensor elements which receives an image of said selected area of the container during the camera's exposure period.

6. A machine according to claim 5, wherein said camera (22) is a CCD, MOS or like camera having a matrix array which stores a received image until a subsequent rigger signal.

7. A machine according to any preceding claim for inspecting a selected area (74) which comprises the finish area of a glass container.

## Patentansprüche

1. Maschine zum Prüfen eines ausgewählten Bereichs (74) eines Glasbehälters (10) mit einer vertikalen Achse (A) in einer Prüfstation mit:
einer Einrichtung, mit der der Glasbehälter in der Prüfstation um seine vertikale Achse (A) drehbar ist;
einer ersten und einer zweiten Lichtquelle (20, 21), mit denen der ausgewählte Bereich eines Behälters beleuchtbar ist, wenn letzterer sich in der Prüfstation befindet;
wobei bei in der Prüfstation befindlichem Behälter die Lichtachsen der ersten und der zweiten Lichtquelle (20, 21) die vertikale Behälterachse (A) im ausgewählten Bereich schneiden,
wobei die erste und die zweite Lichtquelle (20, 21) sich allgemein vertikal erstrecken und jeweils ein allgemein vertikales Feld von Leuchtdioden (LEDs) aufweisen, von denen mindestens eine die Lichtachse dieser Lichtquelle definiert, und wobei eine erste Vielzahl von LEDs aufwärts über die die Lichtachse dieser Lichtquelle definierenden LED hinaus und eine zweite Vielzahl von LEDs abwärts unter die die Lichtachse dieser Lichtquelle definierende LED hinaus verlaufen;
wobei eine Kamera (22) vorgesehen ist, deren Detektorachse die vertikale Achse des Behälters am Schnittpunkt mit den Lichtachsen schneidet,
wobei die Detektorachse über einer zur vertikalen Behälterachse rechtwinkligen waagerechten Ebene einen Winkel von angenähert 45° mit der Behälterachse bildet,
und die Kamera einen durch Auslösen betätigbaren Abbildungsteil zum Abbilden des beleuchteten ausgewählten Behälterbereichs aufweist; und
wobei ein Computer (24) vorgesehen ist, mittels dessen die erfassten Daten aufnehmbar, übertragbar und aufzeichenbar sind;
**dadurch gekennzeichnet, dass**
die Lichtachsen der ersten und der zweiten Lichtquelle in der zur vertikalen Behälterachse rechtwinkligen waagerechten Ebene liegen und an der vertikalen Behälterachse im ausgewählten Behälterbereich miteinander einen rechten Winkel aufspannen;
die LEDs der ersten LED-Vielzahl in Funktion der Entfernung von der zugehörigen Lichtachse fortschreitend abwärts zur dieser Lichtachse hin gekippt sind und die LEDs der zweiten LED-Vielzahl in Funktion der Entfernung von der zugehörigen Lichtachse fortschreitend aufwärts zu dieser hin gekippt sind;
die auf die waagerechte Ebene projizierte Detektorachse der Kamera (22) mit jeder Lichtachse einen Winkel von 135° einschließt;
die Kamera (22) eine kontinuierliche Belichtungsdauer mindestens gleich der Zeitspanne hat, die der Behälter zum Drehen über einen definierten Drehwinkel (Θ) benötigt; und
dass der Computer (24) ausgeführt ist,
den Abbildungsteil der Kamera (22) auszulösen, wenn der Behälter sich am Beginn jedes einer Folge der definierten Winkel befindet, und den Abbildungsteil der Kamera erneut auszulösen, wenn der Behälter sich am Ende jedes der Folge der definierten Winkel befindet, so dass die Kamera kontinuierlich Daten über den ausgewählten Bereich (74) des Behälters erfasst, während letzterer jeden der definierten Drehungswinkel durchläuft,
die Daten am Ende jedes der Folge der definierten Winkel (Θ) zu erfassen und
zwecks Prüfung eine Addition einer Vielzahl (Y) von erfassten und aufgenommenen Daten auszuführen.

2. Maschine nach Anspruch 1, bei der das allgemein vertikale LED-Feld waagerecht nebeneinander liegende LED-Paare aufweist.

3. Maschine nach Anspruch 1 oder 2, bei der die allgemein vertikalen LED-Felder gespiegelte Bögen bilden.

4. Maschine nach einem der vorgehenden Ansprüche, bei der
die Lichtquellen (20, 21) eine ausgewählte Einschaltzeit, gefolgt von einer ausgewählten Ausschaltzeit, aufweisen;
der Computer (24) ausgeführt ist, die Lichtquelle eine Vielzahl von aufeinander folgenden Malen ein- und auszuschalten; und
der Glasbehälter über den definierten Drehwinkel ⊝ drehbar ist, während die Lichtquellen die angegebene Vielzahl von Malen nacheinander ein- und aus-geschaltet werden.

5. Maschine nach Anspruch 4, bei der der Abbildungsteil der Kamera (22) ein Matrixfeld von Sensorelementen ist, das während der Belichtungsdauer der Kamera ein Bild des ausgewählten Behälterbereichs empfängt.

6. Maschine nach Anspruch 5, deren Kamera (22) eine CCD-, MOS- oder ähnliche Kamera mit einem Matrixfeld ist, das ein empfangenes Bild bis zu einem nachfolgenden Auslösesignal speichert.

7. Maschine nach einem der vorgehenden Ansprüche zum Prüfen eines ausgewählten Bereichs (74), der eine endbehandelte Oberfläche eines Glasbehälters beinhaltet.

## Revendications

1. Machine destinée à inspecter une zone sélectionnée (74) d'un récipient en verre (10) ayant un axe vertical (A) au niveau d'une station d'inspection comprenant :
un moyen permettant de mettre en rotation le récipient en verre autour de son axe vertical (A) au niveau de la station d'inspection,
des première et seconde sources de lumière (20, 21) pour illuminer ladite zone sélectionnée d'un récipient lorsque le récipient est au niveau de la station d'inspection,
les axes lumineux de chacune desdites première et seconde sources de lumière (20, 21) coupant l'axe vertical (A) du récipient au niveau de ladite zone sélectionnée lorsque le récipient est au niveau de la station d'inspection,
dans laquelle
les première et seconde sources de lumière (20, 21) s'étendent généralement verticalement, et chaque source de lumière (20, 21) est une barrette de DELs généralement verticale incluant au moins une DEL définissant un axe lumineux pour cette source de lumière, une première pluralité de DELs s'étendant vers le haut au-dessus de la DEL définissant l'axe lumineux pour cette source de lumière et une seconde pluralité de DELs s'étendant vers le bas sous la DEL définissant l'axe lumineux pour cette source de lumière,
une caméra (22) ayant un axe de détecteur coupant ledit axe vertical du récipient au niveau de son intersection avec lesdits axes lumineux,
l'axe de détecteur définissant un angle d'approximativement 45 degrés avec l'axe de récipient au-dessus d'un plan horizontal perpendiculaire à l'axe vertical du récipient,
la caméra incluant une portion d'imagerie déclenchable destinée à imager la zone sélectionnée illuminée du récipient, et
un ordinateur (24) pour capturer, transférer et enregistrer les données acquises
**caractérisée en ce que**
les axes lumineux des première et seconde sources de lumière sont dans le plan horizontal perpendiculaire à l'axe vertical du récipient et définissent l'un par rapport à l'autre un angle orthogonal au niveau de l'axe vertical d'un récipient au niveau de la zone sélectionnée du récipient,
chacune de ladite première pluralité de DEL est progressivement inclinée vers le bas vers son axe lumineux associé en fonction de la distance par rapport à cet axe lumineux et chacune de ladite seconde pluralité de DELs est progressivement inclinée vers le haut vers son axe lumineux associé en fonction de la distance par rapport à cet axe lumineux,
la projection de l'axe de détecteur de la caméra (22) sur le plan horizontal définit un angle de 135 degrés avec chaque axe lumineux,
la caméra (22) a une période d'exposition continue au moins égale au temps requis pour que le récipient tourne selon un angle de rotation (θ) défini, et
l'ordinateur (24) est configuré
pour déclencher la portion d'imagerie de ladite caméra (22) lorsque le récipient est au niveau du début de chacun d'une succession desdits angles définis, et pour déclencher la portion d'imagerie de ladite caméra à nouveau lorsque le récipient est au niveau de l'extrémité de chacun de ladite succession desdits angles définis, de sorte que la caméra acquerra de façon continue des données de ladite zone sélectionnée (74) du récipient pendant que ledit récipient tourne selon chacun desdits angles de rotation définis,
pour acquérir les données au niveau de la fin de chacun de ladite succession d'angles θ définis, et
pour réaliser une addition d'une pluralité (Y) des acquisitions enregistrées pour une inspection à la recherche de défauts.

2. Machine selon la revendication 1, dans laquelle la barrette de DELs généralement verticale inclut des paires de DELs horizontalement adjacentes.

3. Machine selon la revendication 1 ou 2, dans laquelle lesdites barrettes de DELs généralement verticales forment des arcs reflétés.

4. Machine selon l'une quelconque des revendications précédentes, dans laquelle
lesdites sources de lumière (20, 21) ont un temps « activé » sélectionné suivi par un temps « désactivé » sélectionné,
l'ordinateur (24) est configuré pour « activer » et « désactiver » lesdites sources de lumière une pluralité de fois consécutives,
ledit récipient en verre peut entrer en rotation selon l'angle de rotation θ défini pendant que lesdites sources de lumière sont consécutivement « activées » et « désactivées » ladite pluralité de fois.

5. Machine selon la revendication 4, dans laquelle la portion d'imagerie de ladite caméra (22) est un réseau matriciel d'éléments de capteur qui reçoit une image de ladite zone sélectionnée du récipient pendant la période d'exposition de la caméra.

6. Machine selon la revendication 5, dans laquelle ladite caméra (22) est une caméra CCD, MOS ou similaire ayant un réseau matriciel qui stocke une image reçue jusqu'à un signal de déclenchement ultérieur.

7. Machine selon l'une quelconque des revendications précédentes destinée à inspecter une zone sélectionnée (74) qui comprend la zone de finition d'un récipient en verre.
